# EUROPEAN PATENT APPLICATION

(11) **EP 3 006 375 A1**
(43) Date of publication of application: **13.04.2016**
(21) Application number: 15397534.7
(22) Date of filing: 06.10.2015
(51) Int. Cl.: B65D 88/02, B65D 88/12

(54) **A METHOD FOR TRANSPORTING DEMOUNTABLE PLATFORMS IN AN ARTICULATED TRANSPORT VEHICLE, AND A SERIES OF DEMOUNTABLE PLATFORMS**

(30) Priority: 10.10.2014 FI 20145890
(71) Applicant: Järvensivu, Jouni, 39701 Parkano (FI)
(72) Inventor: Järvensivu, Jouni, 39701 Parkano (FI)
(74) Representative: Tampereen Patenttitoimisto Oy

(57) **Abstract**

The invention relates to a method for transporting demountable platforms (11 to 13) in an articulated transport vehicle. In the method according to the invention, a series (10) of demountable platforms is used, which comprises three demountable platforms (11 to 13) that can be fitted within each other. The invention also relates to a series (10) of demountable platforms.

## Description

### Field of the invention

The invention relates to a method for transporting demountable platforms in an articulated transport vehicle, and a series of demountable platforms.

### Background of the invention

When transporting e.g. scrap metal, gravel, crushed stone, wood chips, grain, or other corresponding bulk material (which is thus not pileable) on a demountable platform by an articulated transport vehicle (that is, for example a truck or an articulated vehicle), the traction truck normally carries one demountable platform and the trailer another demountable platform. These demountable platforms are loaded up at the place of departure and emptied at the destination. When returning to the place of departure, the demountable platforms are normally empty, because there is naturally not, or there is very rarely, any transportation of similar non-pileable material between these two locations in two directions. Therefore, if cargo that cannot be loaded on a demountable platform has to be transported from the destination to the place of departure, a second vehicle has to be used for such transportation at the same time when the vehicle that transported the bulk material has to be driven this distance carrying empty demountable platforms.

### Brief summary of the invention

The aim of the invention is to remove the above described drawback related to transportations with demountable platforms. In particular, the aim of the invention is to present a novel method and a series of demountable platforms which reduce the driving of a vehicle for transporting bulk material with empty demountable platforms, and which increase the possibilities for a vehicle to transport cargo also when returning from the destination to the place of departure.

The above mentioned problem is solved by the method according to the invention and the series of demountable platforms used therein, because in the method, a series of demountable platforms according to the invention is used as the demountable platforms of the vehicle, comprising three demountable platforms which can be fitted in each other and moved apart from each other, which are fitted in each other for the time of the return trip and placed on the traction truck so that the front end of the outermost demountable platform and the front end of the innermost demountable platform face the same direction, and the front end of the middle demountable platform faces the opposite direction with respect to the outermost demountable platform. Thus, the trailer of the articulated transport vehicle can be left unladen, without a demountable platform, so that it can be used for transporting any goods that can also be such that does not require sides; that is, for example items to be piled up or single large items. Said directions of the front ends of the demountable platforms make it possible that the demountable platforms fitted in each other can be mounted onto and demounted from the traction truck by applying the demountable platform equipment of the vehicle. To put it more precisely, the method according to the invention is characterized in what is presented in the independent claim 1, and the series of demountable platforms according to the invention is characterized in what is presented in the independent claim 6. Some advantageous embodiments of the method and the series of demountable platforms according to the invention are presented in independent claims 2 to 5 and 7.

The method and the series of demountable platforms according to the invention have the advantage of improving the usability of transport vehicles and reducing driving unladen. This will increase the profit for the deliveries with respect to the vehicle kilometres travelled, even if the charges for the cargo were maintained unchanged. This will significantly improve the efficiency and profitability of transportation by articulated vehicles with demountable platforms. Moreover, the drivers' workload and environmental loading will be reduced, because the total kilometres travelled per delivered cargo will be reduced.

In this application, a transport vehicle refers to a truck, an articulated vehicle or another heavy-duty vehicle that can be used for transporting demountable platforms and cargo, and to which at least one trailer can be connected for transporting more than one demountable platform at a time. In this application, a demountable platform refers to a body consisting of at least a bottom, sides, a front end and a rear end, to be transferred by demountable platform equipment onto a transport vehicle (that is, either a traction truck or a trailer connected to it). Demountable platform equipment refers to mechanical equipment provided in a transport vehicle for transferring a demountable platform, for example by means of wires or a swivelling crane with a hook at its head, movable by hydraulic actuators, onto the bed of the transport vehicle, or from there onto the ground. Using demountable platform equipment in accordance with this application, a demountable platform is typically transferred from the ground onto the bed via the rear end of the frame of the transport vehicle or the trailer. A demountable platform is lowered from the bed onto the ground via the rear end of the transport vehicle or the trailer to the rear side of the platform. In the case of the trailer, the demountable platform can be transferred onto the bed and from the bed onto the ground via the front end of the frame as well.

### Description of the drawings

In the following, the invention will be described in more detail with reference to the appended drawings, in which
Fig. 1 shows a series of demountable platforms according to the invention in a top view, the series of demountable platforms being arranged for the return transport,
Fig. 2 shows the series of demountable platforms according to Fig. 1 in a side view, arranged for the return transport,
Fig. 3 shows the outermost demountable platform in a series of demountable platforms according to Figs. 1 and 2 in a front view, separately from the other demountable platforms in the series of demountable platforms, and
Fig. 4 shows the demountable platform of Fig. 3 seen from behind.

### Detailed description of some advantageous embodiments of the invention

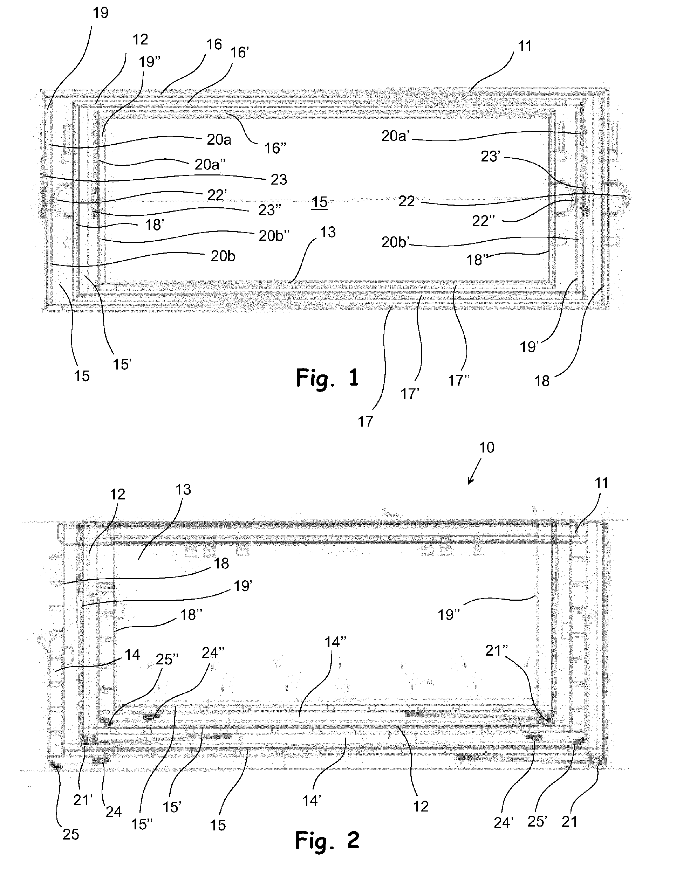

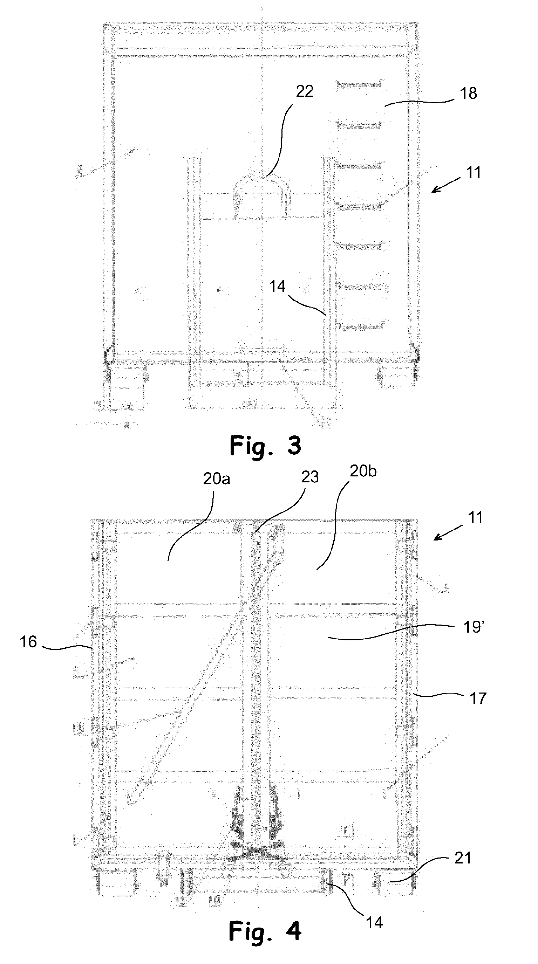

Figures 1 to 4 show a series 10 of demountable platforms according to the invention, comprising three demountable platforms 11 to 13. When the demountable platforms 11 to 13 are unladen and are transported by the respective transport vehicle, the demountable platforms are fitted within each other as shown in Figs. 1 and 2. As shown in Fig. 1, the outermost demountable platform 11 and the innermost demountable platform 13 of these demountable platforms 11 to 13 face the same direction, and the middle demountable platform 12 faces the opposite direction so that its rear end 19' faces the same direction as the front end 18" of the innermost demountable platform 13 and the front end 18 of the outermost demountable platform 11. In this way, the demountable platforms 11 to 13 fitted within each other can be separated from each other so that the middle one 12 is pulled out of the outermost one 11 in a first direction, and the innermost one 13 is pulled out of the middle one 12 in a second direction opposite to the first direction.

All the demountable platforms 11 to 13 in the series 10 of demountable platforms shown in Figs. 1 to 4 comprise, in the same way as a typical demountable platform of prior art, guide bars 14, 14' and 14" as well as a bottom 15, 15' and 15" formed on them, side walls 16, 16' and 16", and 17, 17' and 17"; a front end 18, 18' and 18"; as well as a rear end 19, 19' and 19". The outermost demountable platform 11 has the largest outer dimensions. In the middle demountable platform 12, the bottom 15', the side walls 16' and 17', the front end 18' and the rear end 19' are slightly shorter than in the outermost demountable platform 11 so that the side walls 16' and 17' of the middle demountable platform 12 barely fit inside the side walls 16 and 17 of the outermost demountable platform 11, between the front end 18 and the rear end 19, and so that the front end 18' and the rear end 19' of the middle demountable platform 12 fit inside the front end 18 and the rear end 19 of the outermost demountable platform 11, between the side walls 16 and 17. In the same way, the innermost demountable platform 13 is dimensioned so that its side walls 16" and 17" barely fit inside the side walls 16' and 17' of the middle demountable platform 12, and the front end 18" and the rear end 19" fit inside the front end 18' and the rear end 19' of the middle demountable platform 12, between the side walls 16' and 17' of the middle demountable platform. Dimensioned in this way, the three demountable platforms 11 to 13 can be placed closely within each other as shown in Figs. 1 and 2, arrayed to take as little space as possible, for the time of the transportation. The innermost demountable platform 13 does not extend beyond the middle one 12 in the horizontal direction. Similarly, the middle demountable platform 12 does not extend beyond the outermost one 11 in the horizontal direction. In all the demountable platforms 11 to 13 of the series 10 of demountable platforms, the rear end 19, 19' and 19" is formed by doors 20a and 20b, 20a' and 20b', 20a" and 20b", which can be opened (to the side of the side walls) and closed again. This makes it possible to fit the innermost demountable platform 13 via the doors 20a' and 20b' at the rear end of the middle demountable platform 12 to the inside of the middle demountable platform 12, and to fit the middle demountable platform 12 (with the innermost demountable platform 13 inside it) via the doors 20a and 20b at the rear end of the outermost demountable platform 11 to the inside of the outermost demountable platform 11. In the series 10 of demountable platforms, the rear end 19" of the innermost demountable platform 13 is also equipped with doors 20a" and 20b" similar to those of the outermost demountable platform 11 and the middle demountable platform 12, because the doors 20a and 20b, 20a' and 20b', as well as 20a" and 20b" also have the function of facilitating the loading of the material to be transported on the demountable platforms 11 to 13.

The demountable platforms 11 to 13 of the series 10 of demountable platforms shown in Figs. 1 to 4 also comprise other elements of conventional demountable platforms, such as wheels 21, 21' and 21" fitted in the rear part of the bottom 15, 15' and 15", a shackle 22, 22' and 22" anchored in the guide bars 14, 14' and 14", a door opening and locking mechanism 23, 23' and 23" placed at the rear end 19, 19' and 19", as well as, in the case of demountable platform equipment of the wire mechanism type, traction wire fastening means 24, 24' and 24" and traction wire guide bars 25, 25' and 25" placed in the front part.

For moving the demountable platforms 11 to 13, it is possible to apply, for example, conventional demountable platform equipment. At present, the most common demountable platform equipment is either of the hook mechanism type or of the wire mechanism type. In principle, it would also be possible to use other, less common demountable platform equipment (for example, demountable platform equipment of the chain mechanism type) in connection with the series of demountable platforms shown in in Figs. 1 to 4, provided that the demountable platforms 11 to 13 are equipped with suitable connecting elements to be connected to such demountable platform equipment.

Demountable platform equipment of the hook mechanism type comprises a crane that is swivelled at its first end on a support mounted on the rear part of the frame of the transport vehicle and is hydraulically movable in the longitudinal direction of the transport vehicle, and is normally rectangular when seen from the side. The free end of the crane is provided with a hook designed to grip a fixing loop at the front end of the demountable platform when the crane is swivelled back and slowly moved in the (forward) direction of the transport vehicle again. When swivelling the crane further forward, the demountable platform behind the transport vehicle is transferred onto the support on the rear frame of the transport vehicle. When the demountable platform is pulled onto the vehicle, the crane typically moves on the support in the linear direction as well, so that the demountable platform can be pulled all the way, as well as to a suitable distance behind the transport vehicle when the platform is lowered onto the ground.

Demountable platform equipment of the wire mechanism type is equipped with wire-driven hooks for pulling the demountable platform onto the support on the rear frame of the transport vehicle. In the wire-driven demountable platform equipment, the support placed on the rear frame of the transport vehicle can typically be tilted backwards at a given angle so that when the demountable platform is lowered onto the ground, the demountable platform slides backwards along the tilted support to the rear side of the transport vehicle. Wires and hooks are used to control and slow down this operation so that the lowering onto the ground is as controlled and smooth as the pulling of the demountable platform onto the transport vehicle.

When the series 10 of demountable platforms, arranged for the return transport as shown in Figs. 1 and 2, are dismounted from the traction truck, the demountable platforms 11 to 13 are lowered from the traction truck by the demountable platform equipment thereon. Lowered onto the ground, the middle demountable platform 12 and the innermost demountable platform 13 therein are pulled out of the outermost demountable platform 11 in such a way that the traction truck is first driven to the side of the rear end of the outermost demountable platform 11. After that, the doors 20a and 20b at the rear end 19 of the outermost demountable platform 11 are opened, and the middle demountable platform 12 is pulled out of the outermost demountable platform 11 by using the demountable platform equipment of the traction truck. Thus, the middle demountable platform 12 is moved so far apart from the outermost demountable platform 11 that the traction truck can be driven, for the next step, to the side of the rear end 19' of the middle demountable platform 12, between the outermost demountable platform 11 and the middle demountable platform 12 so that sufficient space is left between them for both the traction truck and the innermost demountable platform 13 to fit between the outermost demountable platform 11 and the middle demountable platform 12. Next, the doors 20a' and 20b' of the middle demountable platform 12 are opened and the innermost demountable platform 13 is pulled out of the middle demountable platform 12. The pulling out thus takes place in a direction opposite to the direction in which the middle demountable platform 12 was pulled out of the outermost demountable platform 11. Now, when the innermost demountable platform 13 is also pulled out of the middle demountable platform 12, all the demountable platforms of the series 10 are apart from each other. After this, it is possible to start filling the demountable platforms 11 to 13 with the material intended to be loaded in them, or before starting the loading, the locations of the demountable platforms 11 to 13 can still be rearranged as desired, by using the demountable platform equipment of the traction truck or, for example, a machine for moving demountable platforms.

Dismounting the series 10 of demountable platforms from the traction truck in the above described way, as well as mounting it onto the traction truck again, as will be described below, can be done equally well by demountable platform equipment with either the hook or the wire mechanism. When using demountable platform equipment with the hook mechanism, the hook at the end of the crane of the demountable platform equipment is applied to grip the shackle 22, 22', 22" of the respective demountable platform 11 to 13 to be moved. In the case of demountable platform equipment with the wire mechanism, the traction wires are fastened to devices 24, 24', 24" in the respective demountable platforms 11 to 13 for fastening the traction wires.

Typically, material to be transported is loaded onto the demountable platforms of the series 10 of demountable platforms when they are placed on the ground. The filled up demountable platforms are pulled by the demountable platform equipment onto the traction truck and the trailer of the transport vehicle so that the outermost demountable platform 11 is placed on the traction truck, and the middle demountable platform 12 and the innermost demountable platform 13 are placed one after the other on the trailer connected to the traction truck. In this way, all the demountable platforms 11 to 13 can carry material to be transported in the normal way, the quantity depending on its weight and/or the volume of the demountable platforms 11 to 13. After the loading and the mounting on board, the demountable platforms 11 to 13 are transported by the transport vehicle to the destination where the material is unloaded from the demountable platforms 11 to 13. The unloading is easier when the demountable platforms are lowered onto the ground. Lowering onto the ground is performed in the normal way by the demountable platform equipment of the traction truck. For unloading, the doors 20a, 20b, 20a', 20b', 20a", and 20b" of the demountable platforms are opened so that the unloading can be done e.g. by a shovel loader via the open rear ends 19, 19', 19" of the demountable platforms 11 to 13, whereby the emptying can be performed as quickly and easily as possible.

Before leaving for the return trip, the demountable platforms 11 to 13 are first moved by the demountable platform equipment of the traction truck so that the demountable platforms of the series are within each other, that is, in the return transportation position, as shown in Figs. 1 and 2. This is done by first closing the doors of the innermost demountable platform 13 and moving the innermost demountable platform 13 to the inside of the middle demountable platform 12. Next, the doors 20a' and 20b' of the middle demountable platform 2 are closed, and the middle demountable platform 12 is moved to the inside of the outermost demountable platform 11. Following this, the doors 20a and 20b of the outermost demountable platform 11 are closed, and with the outermost demountable platform 13, all the three demountable platforms 11 to 13 are pulled onto the traction truck. Thus, the trailer of the whole articulated vehicle is vacant on the return trip. Consequently, it can be loaded with such cargo that does not require side walls to hold the goods in place during the transportation.

The method and the series of demountable platforms according to the invention can be implemented in many ways different from the above described example embodiments. For example, it is possible that the trailer is equipped with a bed used as a support for the demountable platform, and auxiliary side walls fastened to its edges. The auxiliary side walls can be, for example, hinged at the edges of the bed of the trailer so that they can be swivelled to the vertical position and connected to each other and/or braced so that the auxiliary side walls form a bed bordered at the front, the rear and the sides. Alternatively, the auxiliary side walls could be mountable on brackets at the edges of the bed by releasable fasteners or locking devices. With this kind of a bed arrangement, the trailer of the transport vehicle can be used on the return journey as well, for transporting such bulk material that is only held by a bed with side walls. In some embodiments, it would also be possible to load such material on the innermost demountable platform of the series within each other, which would further improve the efficiency and profitability of transportation with demountable platforms. Consequently, the invention is not limited to the example embodiments described above, but it may vary within the scope of the appended claims.

## Claims

1. A method for transporting demountable platforms (11 to 13) in an articulated transport vehicle, in which method a series (10) of demountable platforms is used, comprising three demountable platforms (11 to 13) that are nestable, **characterized in that** when the demountable platforms (11 to 13) are transported unladen, the empty demountable platforms (11 to 13) are fitted within each other and placed on the traction vehicle, and that the demountable platforms (11 to 13) are nested in such a way that the front end (18) of the outermost demountable platform (11) and the front end (18") of the innermost demountable platform (13) face the same direction, and the front end (18') of the middle demountable platform (12) faces a direction opposite to the outermost demountable platform (11) and the innermost demountable platform (13).

2. The method according to claim 1, **characterized in that** when material that is transportable on demountable platforms is transported on the demountable platforms (11 to 13), one demountable platform (11) is carried by the traction truck, and two demountable platforms (12, 13) are carried by the trailer.

3. The method according to claim 1, **characterized in that** when demountable platforms (11 to 13) placed within each other are pulled out of each other, the middle demountable platform (12) having the innermost demountable platform (13) inside it is pulled out of the outermost demountable platform (11) in a first direction, and the innermost demountable platform (13) is pulled out of the middle demountable platform (12) in a second direction, the second direction being opposite to the first direction.

4. The method according to claim 3, **characterized in that** demountable platform equipment of the traction truck is used for pulling out the demountable platforms (11 to 13) of the series (10) of demountable platforms, and for fitting them within each other again.

5. The method according to claim 4, **characterized in that** for pulling the middle demountable platform (12) out of the outermost demountable platform (11), or for moving it to the inside of the outermost demountable platform (11) by the demountable platform equipment of the transport vehicle, the demountable platform equipment is moved to the side of the front end (18') of the middle demountable platform (12), and for pulling the innermost demountable platform (13) out of the middle demountable platform (12), or for moving it to the inside of the middle demountable platform (12), the demountable platform equipment is moved to the side of the rear end (19') of the middle demountable platform (12).

6. A series (10) of demountable platforms, the series of demountable platforms comprising three demountable platforms (11 to 13) to be placed inside each other, **characterized in that** the series of demountable platforms (11 to 13) comprises an outermost demountable platform (12), a middle demountable platform (12) and an innermost demountable platform (13), and that the middle demountable platform (12) has such outer dimensions that it can be fitted at least partly inside the outermost demountable platform (11), and that the innermost demountable platform (13) has such outer dimensions that it can be fitted at least partly inside the middle demountable platform (12), and that when the demountable platforms (11 to 13) of the series (10) are nested, the front end (18) of the outermost demountable platform (11) and the front end (18") of the innermost demountable platform (13) face the same direction, and the front end (18') of the middle demountable platform (12) faces the opposite direction with respect to the front end (18) of the outermost demountable platform (11) and the front end (18") of the innermost demountable platform (13).

7. The series (10) of demountable platforms according to claim 6, **characterized in that** when the demountable platforms (11 to 13) of the series (10) of demountable platforms are nested, the innermost demountable platform (13) is, seen from above, entirely inside the middle demountable platform (12), and the middle demountable platform (12) is, seen from above, entirely inside the outermost demountable platform (11).
